# EUROPÄISCHE PATENTSCHRIFT

(11) **EP 1 659 286 B1**
(45) Veröffentlichungstag und Bekanntmachung des Hinweises auf die Patenterteilung: **20.08.2008**
(21) Anmeldenummer: 04027350.0
(22) Anmeldetag: 18.11.2004
(51) Int. Cl.: F03D 1/00, F15B 15/06

(54) **Törn-Vorrichtung zum Drehen des Antriebsstranges einer Windkraftanlage**
Turning device for a wind generator power train
Vireur pour axe de générateur entraîné par une éolienne

(43) Veröffentlichungstag der Anmeldung: 24.05.2006
(73) Patentinhaber: Eickhoff Maschinenfabrik GmbH, 44789 Bochum (DE)
(72) Erfinder: Aust, Rainer, 44879 Bochum (DE); Neufelder, Marc, 58452 Witten (DE)
(74) Vertreter: Behrendt, Arne

(56) Entgegenhaltungen:
- EP-A- 1 167 754
- DE-A1- 4 135 182
- US-A- 4 078 441
- US-A- 4 181 032

## Beschreibung

Die vorliegende Erfindung betrifft eine Törn-Vorrichtung zum Drehen des Antriebsstranges einer Windkraftanlage oder zumindest von Teilabschnitten desselben, wobei der Antriebsstrang in einem Maschinenrahmen drehbar gelagert ist, wobei der Antriebsstrang einen Flansch und die Törnvorrichtung eine am Maschinenrahmen festsetzbare Konsole umfasst. Eine Törnvorrichtung gleicher Gattung ist aus der DE 100 31 473 C1 bekannt.

Bei der Wartung von Windkraftanlagen oder beim Austausch verschlissener Komponenten ist es notwendig, den Antriebsstrang einschließlich des Rotors und teilweise auch des Generators in eine beliebige Winkelposition zu drehen und dort sicher zu arretieren. Hierzu werden Törn- bzw. Arretier-Vorrichtungen eingesetzt.

Die aus der DE 100 31 473 C1 bekannte Törn-Vorrichtung setzt sich im Wesentlichen aus zwei Bestandteilen zusammen: Ein konsolenartiges Halteelement, welches an einer Komponente der Windkraftanlage anbringbar ist und in welchem ein Ritzel gelagert ist sowie ein Werkzeug, welches an dem Halteelement anbringbar ist und mit welchem das Ritzel antreibbar ist. Ein weiterer Bestandteil der vorbekannten Törn-Vorrichtung ist eine Zahnscheibe, die mit der Welle des Antriebsstrangs gekoppelt ist. Bei der Zahnscheibe handelt es sich vorzugsweise um eine verzahnte Bremsscheibe, die auf die Getriebeausgangswelle aufgesetzt wird. Das Halteelement wird an einer Komponente der Windkraftanlage so montiert, dass das Ritzel mit der Zahnscheibe kämmt. Auf diese Weise entsteht ein Nebenantrieb mit Hilfsgetriebe, welcher es gestattet, den Antriebsstrang mit dem Werkzeug zu drehen.

Zur Arretierung des Antriebsstrangs schlägt die DE 100 31 472 C1 eine Vorrichtung vor, die einen Vorsprung umfasst, welcher radial in die Verzahnung der Zahnscheibe eintauchbar ist und auf diese Weise das Verdrehen des Antriebsstranges verhindert.

Der Rotordurchmesser einer Windkraftanlage der heute weit verbreiteten 1.5 MW-Klasse beträgt etwa 80 Meter. Allein das daraus erwachsene Trägheitsmoment des Rotors erfordert erhebliche Antriebs- bzw. Feststellmomente, die über die Törn-Vorrichtung bzw. die Arretier-Vorrichtung aufgebracht werden müssen. Zudem überlagern etwaige montagebedingete Momente sowie aerodynamische Lasten das Trägheitsmoment des Rotors und stellen hohe Leistungsanforderungen an die Törn-/Arretier-Vorrichtungen. Als Werkzeug zum Antrieben der vorbekannten Törn-Vorrichtung werden in der Praxis Elektroschrauber verwendet. Da deren Antriebsleistung begrenzt ist, ist eine große Übersetzung zwischen der Antriebswelle des Werkzeugs und dem Antriebsstrang der Windkraftanlage erforderlich, um ein hinreichendes Drehmoment zu entwickeln. Da der Bauraum in der Maschinengondel begrenzt ist, können die Zahnscheiben einen nicht beliebig großen Durchmesser erreichen. Aus diesen Gründen ist die Zahnscheibe auf der "schnellen Seite" des Antriebsstrangs anzuordnen, also zwischen Getriebe und Generator. Beim Drehen des Rotors kann so die Übersetzung des Getriebes von dem Nebenantrieb der vorbekannten Törn-Vorrichtung mit genutzt werden. Die Übersetzung eines Windkraftgetriebes der 1.5 MW-Klasse beträgt typischerweise 90. Dank der großen Übersetzung, die aus Hintereinanderschaltung von Hilfsgetriebe und Windkraftgetriebe entsteht, ist es möglich, den mächtigen Rotor mit einem vergleichsweise "schwachen" Elektrowerkzeug zu drehen.

Der Umstand, dass die vorbekannte Törn-Vorrichtung praktisch nur in Verbindung mit dem Getriebe der Windkraftanlage in der Lage ist, den Rotor zu drehen, macht sie für bestimmte Montage- und Reparaturzwecke unbrauchbar. So ist es im Zuge von Instandsetzungsarbeiten an Windkraftgetrieben erforderlich, den Antriebstrang im Getriebe aufzutrennen, den rotorseitigen Teil des Antriebsstrangs abschnittsweise zu drehen und in einer bestimmten Winkelstellung festzusetzen. Dies ist mit den vorbekannten Törn- bzw. Arretier-Vorrichtungen unmöglich.

Ein Törnvorrichtung gemäß dem Stand der Technik ist aus der DE 4135182 bekannt.

Der vorliegenden Erfindung liegt daher die Aufgabe zugrunde, eine Törnvorrichtung anzugeben, die dafür geeignet ist, beliebige Abschnitte des Antriebsstrangs einer Windkraftanlage ohne Zuhilfenahme des Getriebes zu drehen. Darüber hinaus muss die Törn-Vorrichtung leicht auf den Turm transportierbar und rasch an den Antriebsstrang ankoppelbar sein.

Diese Aufgabe wird gelöst mit einer Törn-Vorrichtung der eingangs genannten Art, die eine an den Flansch anbringbare Adapterscheibe umfasst, welche eine Mehrzahl von Kraftangriffspunkten aufweist, die entlang eines Kreises angeordnet sind und die des Weiteren mindestens ein Linearstellglied aufweist, welches einerseits in der Konsole winkelbeweglich gelagert ist und welches andererseits mit der Adapterscheibe über deren Kraftangriffspunkte winkelbeweglich koppelbar ist.

Eine Grundidee der vorliegenden Erfindung besteht darin, den Antriebsstrang nicht rotatorisch, sondern abschnittsweise linear anzutreiben. Hierfür wird mindestens ein Linearstellglied eingesetzt, das sich mit seinem einem Ende gegen den Maschinenrahmen abstützt und mit seinem anderen Ende an einem Krafteinleitungspunkt des Antriebsstrangs angebracht ist. Als Linearstellglied eignen sich Kugelumlaufspindeln und dergleichen oder aufgrund ihrer vorzüglichen Leistungsdichte Hydraulikzylinder. Das Linearstellglied wird zum Drehen wiederholt ausgefahren bzw. eingezogen und nach jedem Hub erneut an einem anderen Kraftangriffspunkt auf der Peripherie des Kreises angesetzt, sofern der Hub des Linearstellglieds nicht ausreicht, den Antriebsstrang um den gewünschten Winkel zu drehen. Die kinematische Umsetzung der linearen Hubbewegung in die Drehbewegung bedingt die beidseitige, winkelbewegliche Lagerung des Linearstellgliedes.

Da die Antriebsstränge von bestehenden Windkraftanlagen in der Regel über geeignete Kraftangriffspunkte nicht verfügen, werden diese erfindungsgemäß über die Adapterscheibe bereitgestellt, die an dem stets vorzufindenden Flansch anzubringen ist. Freilich ist es denkbar, eine zukünftige Generation von Windkraftanlagen werksseitig mit geeigneten Kraftangriffspunkten im Antriebsstrang auszurüsten. Die Adapterscheibe könnte dann entfallen.

Auch vergrößert die Adapterscheibe den Hebelarm. Hierdurch ist es möglich, die Hubkraft des Linearstellglieds gering zu halten, ihr Gewicht zu senken und sie gegebenenfalls auch manuell anzutreiben.

Wie bereits erwähnt, ist der Bauraum in der Gondel begrenzt, sodass die Adapterscheibe ebenso wenig wie die vorbekannte Zahnscheibe keinen beliebig großen Durchmesser erreichen kann. Dies würde auch ihre Masse unbillig erhöhen. Eine vorteilhafte Weiterbildung der Erfindung besteht folglich darin, die Adapterscheibe nicht direkt anzutreiben, sondern zwischen Adapterscheibe und Linerstellglied einen zusätzlichen Hebel vorzusehen. Der Hebel weist eine Schnittstelle auf, über welche er den Krafteinleitungspunkten der Adapterscheibe festsetzbar ist und verfügt weiterhin über ein Hebelgelenk, in welchem das Linearstellglied winkelbeweglich lagerbar ist. An der Adapterscheibe montiert, steht der Hebel lediglich in einem begrenzen Sektor über die Peripherie der Adapterscheibe hervor. Der begrenzte Raum in der Gondel kann so optimal ausgenutzt werden.

Ein geeigneter Flansch zum Anbringen der Adapterscheibe weist vorteilhafterweise eine Mehrzahl von Schraubenköpfen auf, die auf einem Schraubenteilkreis angeordnet sind. In diesem Fall ist die Adapterscheibe mit einem Lochkreis zu versehen, dessen Durchmesser dem Durchmesser des Schraubenteilkreises entspricht und in dessen Löcher Steckschlüsseleinsätze einsetzbar sind, die auf die Schraubenköpfe des Flansches passen. Auf diese Weise wird eine besonders preisgünstige Verbindung zwischen Adapterscheibe und Flansch geschaffen.

Als Flansch eignet sich insbesondere die Spannscheibe, welche Rotorwelle und Getriebe verbindet. Eine solche Spannscheibe - auch Schrumpfscheibe genannt - ist in nahezu jeder Windkraftanlage verbaut und verfügt über die vorstehend beschriebenen Schraubenköpfe.

Zweckmäßigerweise teilt man die Adapterscheibe in eine Mehrzahl von Segmenten, so dass sie einfacher zu handhaben ist. Es genügt, die Spannscheibe zweigeteilt auszuführen. Sie kann so von zwei Seiten auf den Antriebsstrang aufgesetzt werden; ein umständliches "Auffädeln" entfällt.

Bei fast allen Wartungsarbeiten an Windkraftgetrieben ist es zwingend erforderlich, den Antriebsstrang sicher zu arretieren. Ein plötzliches In-Bewegung-Setzen des Rotors ist durch Unwuchten und Windböen jederzeit möglich und stellt ein ernsthaftes Verletzungsrisiko für die Monteure dar. Da bei abgeschlagenem Triebstang die Bremse der Windkraftanlage unwirksam sein kann, ist es angezeigt, den Hub des Linearstellgliedes arretierbar auszuführen: So ausgelegt dient die Törn-Vorrichtung zugleich als Arretier-Vorrichtung.

Vorteilhafterweise empfiehlt es sich, zwei Linearstellglieder zu verwenden, die durch Parallelbetrieb die erforderliche Drehkraft auf den Antriebsstrang ausüben. Hierdurch ist es möglich, die einzelnen Linearstellglieder leichter auszuführen, was ihren Transport auf die Gondel vereinfacht.

Die vorliegende Erfindung soll nun anhand eines Ausführungsbeispiels näher erläutert werden. Hierfür zeigen:
- Fig. 1:: Typischer Antriebsstrang einer Windkraftanlage (Stand der Technik);
- Fig. 2:: Nabenflansch, Rotorwelle und Getriebe;
- Fig. 3:: Einzelheit Adapterscheibe mit Steckschlüsseleinsätzen;
- Fig.4:: Nabenflansch, Rotorwelle und Getriebe, zusätzlich mit Adapterscheibensegment;
- Fig. 5:: Nabenflansch, Rotorwelle und Getriebe mit Adapterscheibe komplett;
- Fig. 6:: Törn-Vorrichtung, Axialansicht;

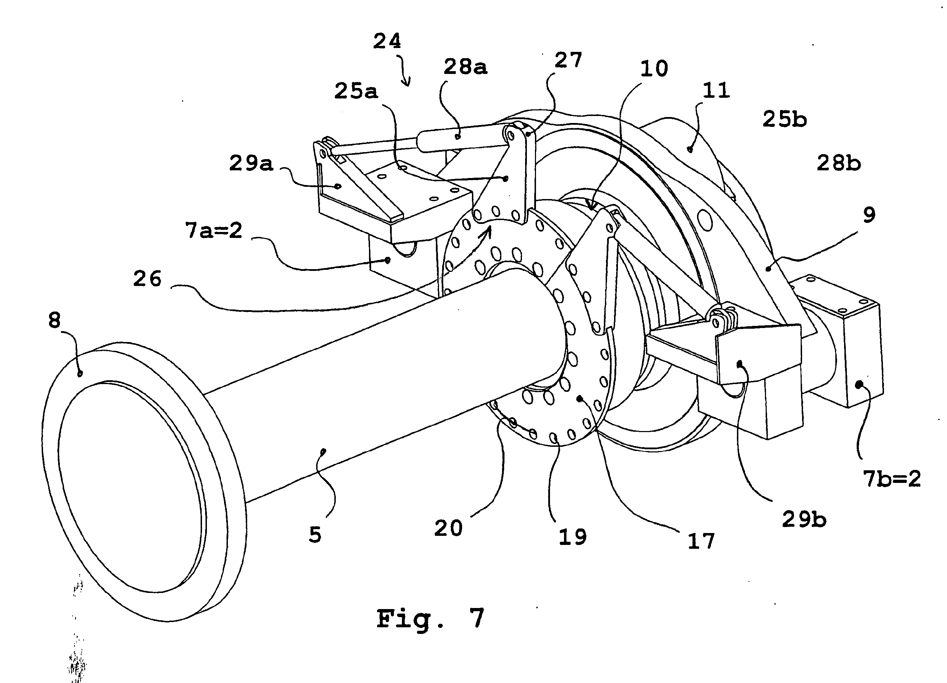

- Fig. 7:: Törn-Vorrichtung, perspektivisch.

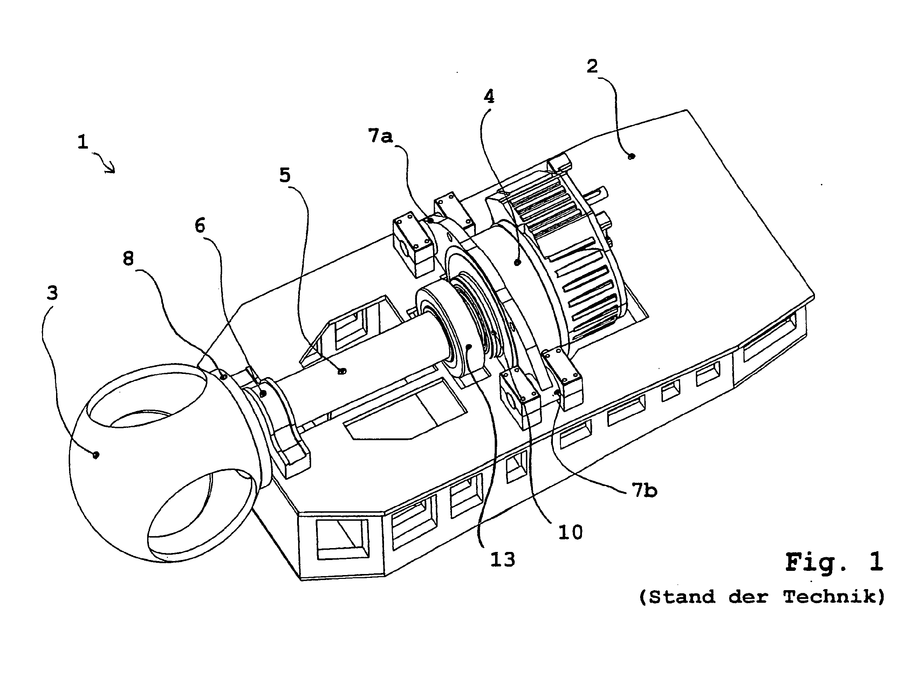

Figur 1 zeigt einen Antriebsstrang einer typischen 1.5 MW-Windkraftanlage. Weitere Informationen sind zu finden in: Hau, Erich. Windkraftanlagen: Grundlagen, Technik, Einsatz, Wirtschaftlichkeit. Berlin u.a., 2003. Seiten 279 ff.

Der Antriebsstrang 1 ist in einem Maschinenrahmen 2 drehbar gelagert und erstreckt sich von einer Rotornabe 3 bis zu einem hier nicht dargestellten Generator. Kernstück des Antriebsstranges 1 ist ein Getriebe 4, welches über eine Rotorwelle 5 mit der Rotornabe 3 verbunden ist. Das Getriebe 4 umfasst eine Planetenstufe vor einer Standräderstufe und übersetzt "ins Schnelle", d.h., es steigert die geringe Drehzahl des Rotors in eine hinreichend hohe Eingangsdrehzahl für den Generator. Gelagert wird der Antriebsstrang 1 über ein Rotorlager 6 und über zwei Getriebestützen 7a, 7b. Man spricht von einer "Dreipunktlagerung", dessen Bestandteil das Getriebe 4 ist. Die Getriebestützen 7a, 7b sind fest mit dem Maschinenrahmen 2 verbunden und können daher als Teil desselben aufgefasst werden.

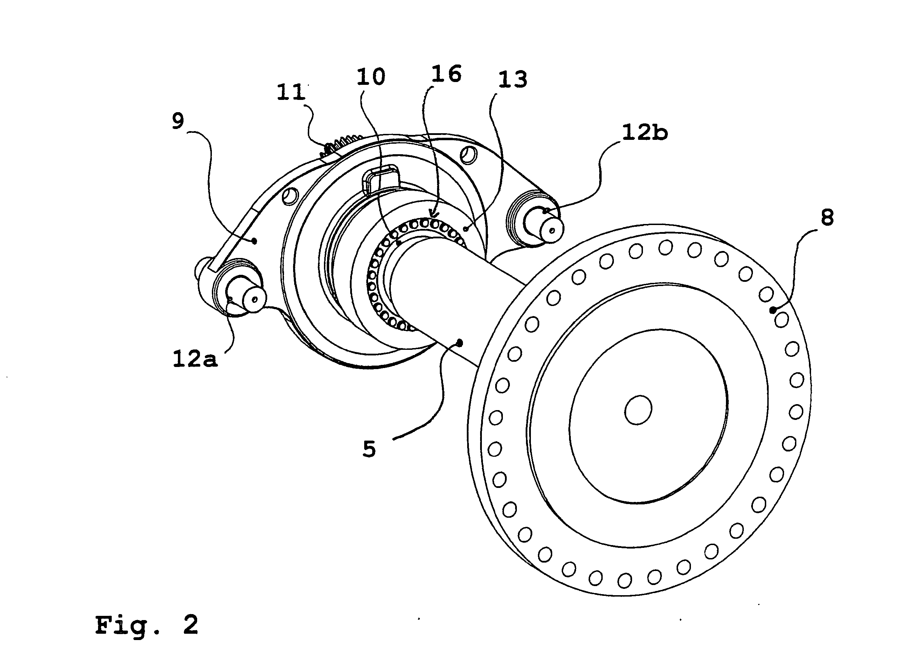

Figur 2 zeigt den "langsamen Abschnitt" des Antriebsstranges 1 in Blickrichtung des Getriebes 4. Im Vordergrund ist ein Nabenflansch 8 abgebildet, mittels welchem die Rotorwelle 5 an der Rotornabe befestigt wird. Von dem Getriebe ist in der Figur 2 lediglich ein Gehäusedeckel 9 dargestellt, in welchem ein Planetenträger 10 drehbar gelagert ist. In dem Planetenträger 10 sind wiederum drei Planetenräder 11 drehbar gelagert, von denen eines teilweise verdeckt erkennbar ist. Der Gehäusedeckel 9 weist zwei Lagerbuchsen 12a, 12b zur Aufnahme von Lagerbolzen auf, über welche das Getriebe 4 in den Getriebestützen 7a, 7b gelagert ist. Der Antrieb des Getriebes erfolgt auf den Planetenträger 10. Hierzu ist der Planetenträger 10 mit der Rotorwelle 5 mittels einer Spannscheibe 13 verbunden.

Die Spannscheibe 13 weist eine Mehrzahl von Schraubenköpfen 14 auf, die auf einem Schraubenteilkreis 15 angeordnet sind. Die Schraubenköpfe 14 dienen dazu, die Spannscheibe 13 anzuziehen und eine kraftschlüssige Verbindung zwischen Planetenträger 10 und Rotorwelle 5 zu bilden. Die fast in jedem Antriebsstrang einer Windkraftanlage vorhandene Spannscheibe 13 wird bei dem vorliegenden Ausführungsbeispiel als Flansch 16 zum Anbringen einer Adapterscheibe 17 genutzt. Alternativ könnte der Nabenflansch 8 oder eine nicht dargestellte Kupplung zwischen Abtriebswelle und Generator als Flansch 16 für die Adapterscheibe 17 genutzt werden.

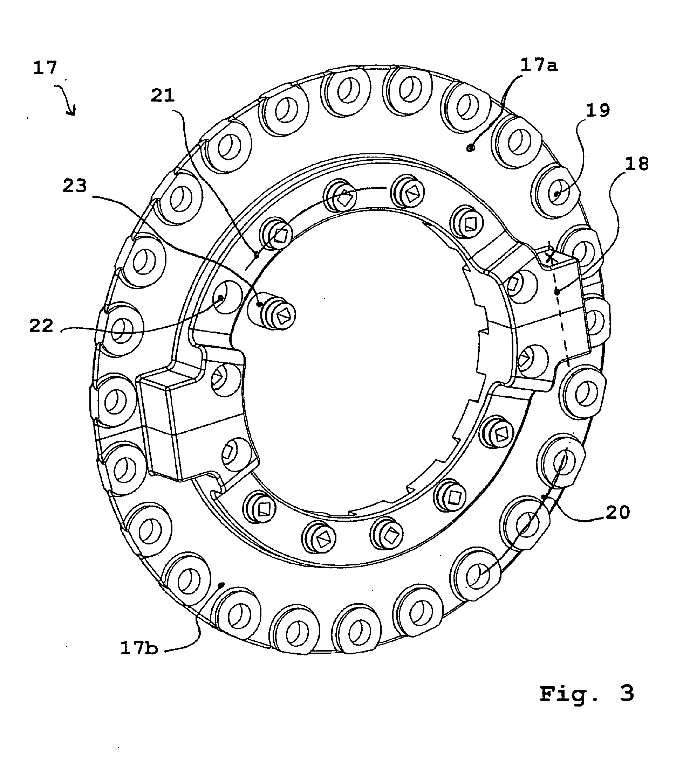

Die Adapterscheibe 17 ist in Figur 3 dargestellt. Sie setzt sich aus zwei Segmenten 17a, 17b zusammen, die über symbolisch dargestellte Bolzen 18 miteinander lösbar verbunden werden können. Die Adapterscheibe 17 weist eine Mehrzahl von Kraftangriffspunkten 19 auf, die entlang eines Kreises 20 angeordnet sind. Konzentrisch zu dem Kreis 20 angeordnet umfasst die Adapterscheibe 17 einen Lochkreis 21, in dessen Löcher 22 Steckschlüsseleinsätze 23 nach DIN 3124 oder dergleichen einsetzbar sind. Der Durchmesser des Lochkreises 21 entspricht genau dem Durchmesser des Schraubenteilkreises 15 der als Flansch 16 benutzten Spannscheibe 13. Die Steckschlüsseleinsätze 23 passen auf die Schraubenköpfe 14 des Schraubenteilkreises 15. Auf diese Weise ist es möglich, die Adapterscheibe 17 mit dem Flansch 16 über die Steckschlüsseleinsätze 23 zu verbinden. Die Steckschlüsseleinsätze 23 fungieren dabei als Mitnehmer.

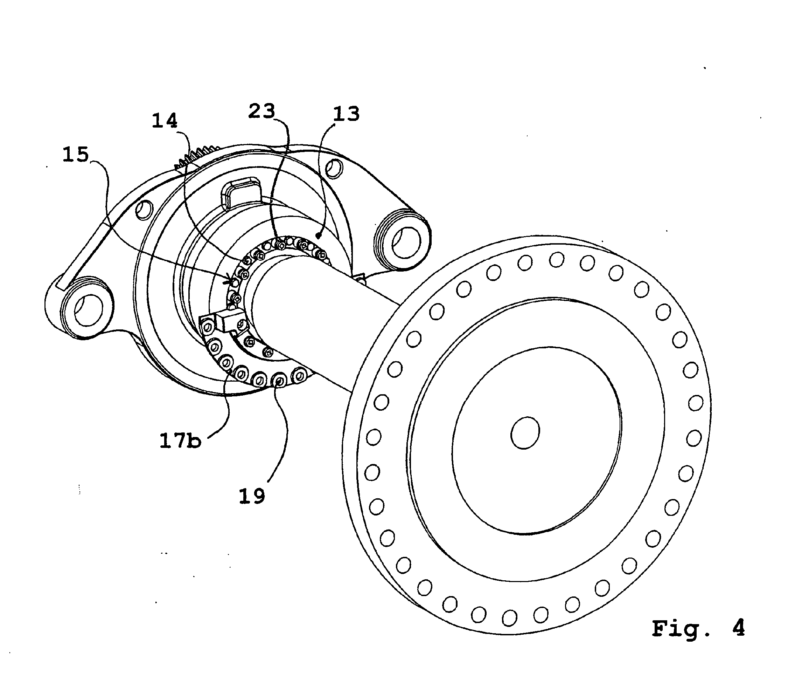

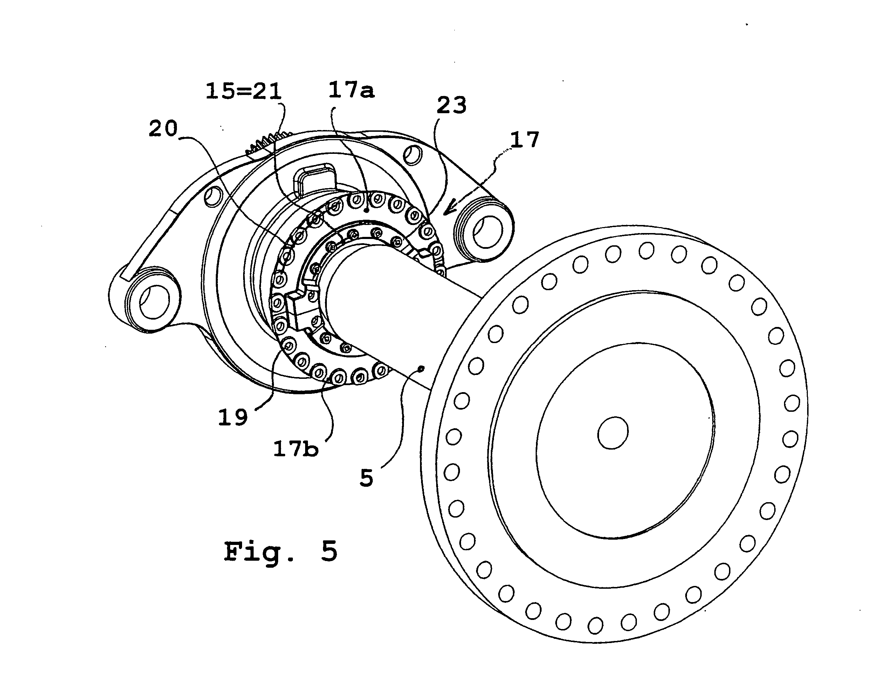

Figur 4 zeigt, wie das erste Segment 17a auf den Flansch 16 aufgesetzt ist, in Figur 5 ist auch das zweite Segment 17b der Adapterscheibe 17 montiert.

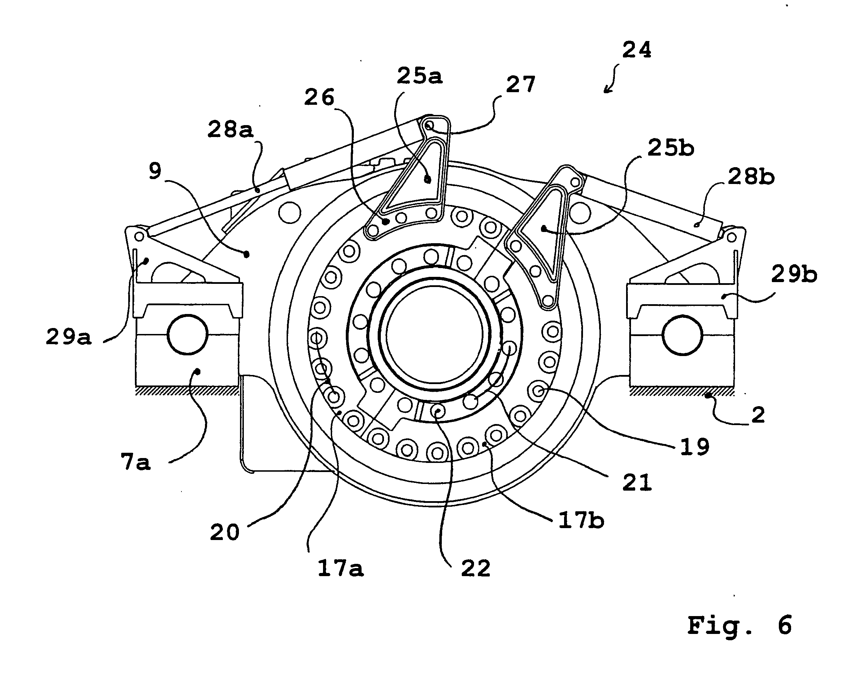

In Figur 6 ist die Törn-Vorrichtung 24 komplett montiert dargestellt. Sie umfasst zwei Hebel 25a, 25b, die über eine mit den Kraftangriffspunkten 19 korrespondierenden Schnittstelle 26 mit der Adapterscheibe 17 verbunden sind. Beide Hebel 25a, 25b weisen jeweils ein Hebelgelenk 27 auf. In diesem Hebelgelenk 27 ist jeweils ein Linearstellglied 28a, 28b mit einem Ende winkelbeweglich gelagert. Bei den Linearstellgliedern 28a, 28b handelt es sich um Standard-Hydraulikzylinder, die mit einer nicht dargestellten, handelsüblichen Hand- oder Elektropumpe verschaltet sind. Die Schaltung ist so auszuführen, dass der eine Hydraulikzylinder (=28a) ausfährt, wenn der andere Hydraulikzylinder (=28b) einfährt. Auf diese Weise wird gleichzeitig an der Adapterscheibe 17 gezogen und gedrückt, die Linearstellglieder 28a, 28b müssen lediglich die halbe Drehkraft aufwenden, wodurch sie vergleichsweise leicht und gut transportabel werden.

Mit ihrem zweiten Ende sind die Linearstellglieder 28a, 28b winkelbeweglich in Konsolen 29a, 29b gelagert, die wiederum an den Getriebestützen 7a, 7b des Maschinenrahmens 2 zeitweilig festgeschraubt werden.

Um den Antriebsstrang 1 mit der erfindungsgemäßen Törn-Vorrichtung 24 zu drehen, wird das erste Linearstellglied 28a eingezogen und zugleich das zweite Linearstellglied 28b ausgefahren. Hierdurch wird der Antriebsstrang 1 um einen Winkel von etwa 30° gedreht. Soll der Antriebsstrang über diesen Winkel hinaus gedreht werden, werden die Verbindungen zwischen den Schnittstellen 26 der Hebel 25a, 25b und der Kraftangriffspunkte 19 Adapterscheibe 17 nacheinander gelöst und entsprechend dem Hub der Linearstellglieder 28a, 28b an einen anderen Abschnitt des Kreises 20 erneut angesetzt. Auf diese Weise ist es möglich, den Antriebsstrang 1 in beliebige Richtungen um 360° zu drehen, indem die Hebel 25a, 25b jeweils neu in den Kraftangriffspunkten 19 angesetzt werden.

Um ein versehentliches Bewegen des Antriebsstranges 1 zu verhindern, sollten die Linearstellglieder 28a, 28b arretierbar sein. Dies ist beispielsweise bei Verwendung von Hydraulikzylindern durch Sperren der mit Druckmedium gefüllten Zylinderräume problemlos möglich. Dabei sollte darauf geachtet werden, dass die Linearstellglieder 28a, 28b einzeln arretierbar sind und den Rotor halten können, sodass das eine Linearstellglied arretiert bleiben kann, währenddessen das andere gelöst und neu an die Adapterscheibe 17 angesetzt wird.

Es ist auch möglich, auf die Hebel 25a, 25b zu verzichten und die Linearstellglieder 28a, 28b direkt an die Kraftangriffspunkte 19 der Adapterscheibe 17 anzusetzen. Dann müssen sie allerdings eine entsprechend höhere Kraft aufbringen können.

Die gesamte Törn-Vorrichtung ist in eine überschaubare Anzahl von Einzelteilen von geringem Gewicht zerlegbar, die problemlos von den auf Windkraftanlagen vorhandenen Bordkränen in die Gondel gehievt werden können. Auf den kostspieligen Einsatz von externen Mobilkränen kann verzichtet werden.

## Patentansprüche

1. Törn-Vorrichtung (24) zum Drehen des Antriebsstranges (1) einer Windkraftanlage oder zumindest von Teilabschnitten desselben,
a) wobei der Antriebsstrang (1) in einem Maschinenrahmen (2) drehbar gelagert ist,
b) wobei der Antriebsstrang (1) einen Flansch (16) umfasst,
c) und wobei die Törn-Vorrichtung (24) eine am Maschinenrahmen (2) festsetzbare Konsole (29a) umfasst,
**gekennzeichnet durch**
d) eine an den Flansch (16) anbringbare Adapterscheibe (17), welche eine Mehrzahl von Kraftangriffspunkten (19) aufweist, die entlang eines Kreises (20) angeordnet sind,
e) und mindestens ein Linearstellglied (28a), welches einerseits in der Konsole (29a) winkelbeweglich gelagert ist und welches andererseits mit der Adapterscheibe (17) über deren Kraftangriffspunkte (19) winkelbeweglich koppelbar ist.

2. Törn-Vorrichtung (24) nach Anspruch 1, **gekennzeichnet durch** mindestens einen Hebel (25a),
a) mit einem Hebelgelenk (27), in welchem das Linearstellglied (28a) winkelbeweglich gelagert ist,
b) und mit einer mit den Krafteinleitungspunkten (19) der Adapterscheibe (17) korrespondierenden Schnittstelle (26), über welche der Hebel (25a) an der Adapterscheibe (17) festsetzbar ist.

3. Törn-Vorrichtung (24) nach Anspruch 1, **dadurch gekennzeichnet,**
a.) **dass** der Flansch (16) eine Mehrzahl von Schraubenköpfen (14) aufweist, die auf einem Schraubenteilkreis (15) angeordnet sind,
b) und dass die Adapterscheibe (17) einen Lochkreis (21) aufweist, dessen Durchmesser dem des Schraubenteilkreises (15) entspricht und in dessen Löcher (22) auf die Schraubenköpfe (14) passende Steckschlüsseleinsätze (23) einsetzbar sind.

4. Törn-Vorrichtung (24) nach Anspruch 3, wobei der Antriebsstrang (1) eine Rotorwelle (5) und ein Getriebe (4) umfasst, **dadurch gekennzeichnet, dass** es sich bei dem Flansch (16) um eine Spannscheibe (13) handelt, welche die Rotorwelle (5) mit dem Getriebe (4) verbindet.

5. Törn-Vorrichtung (24) nach Anspruch 1, **dadurch gekennzeichnet, dass** die Adapterscheibe (17) in eine Mehrzahl von Segmenten (17a, 17b) geteilt ist, insbesondere zweigeteilt ist.

6. Törn-Vorrichtung (24) nach Anspruch 1, **dadurch gekennzeichnet, dass** der Hub des Linearstellgliedes (28a) arretierbar ist.

7. Törn-Vorrichtung (24) nach Anspruch 1, **gekennzeichnet durch** zwei Linearstellglieder (28a, 28b).

## Claims

1. A turning device (24) for turning the drive train (1) of a wind energy system, or, at least, partial sections of same,
a) wherein the drive train (1) is rotatably mounted in a machine frame (2),
b) wherein the drive train (1) comprises a flange (16),
c) and wherein the turning device (24) comprises a bracket (29a) which can be fixed to the machine frame (2),
**characterised by**
d) an adapter disk (17) which can be affixed to the flange (16) and which has a plurality of force application points (19) which are disposed along a circle (20),
e) and at least one linear setting element (28a), which, on the one hand, is mounted movably in terms of angle in the bracket (29a), and which, on the other hand, can be coupled movably in terms of angle to the adaptor disk (17) by way of the force application points (19) thereof,

2. A turning device (24) according to Claim 1, **characterised by** at least one lever (25a),
a) with a lever joint (27) in which the linear setting element (28a) is mounted movably in terms of angle,
b) and with an interface (26) which corresponds to the force application points (19) of the adapter disk (17), by way of which interface the lever (25a) can be fixed to the adapter disk (17).

3. A turning device (24) according to Claim 1, **characterised in that**
a) the flange (16) has a plurality of screw heads (14) which are disposed along a screw pitch circle (15),
b) and that the adapter disk (17) has a hole circle (21), the diameter of which corresponds to that of the screw pitch circle (15), and into the holes (22) of which can be inserted socket wrench inserts (23) which fit onto the screw heads (14).

4. A turning device (24) according to Claim 3, wherein the drive train (1) comprises a rotor shaft (5) and a gear mechanism (4), **characterised in that** the flange (16) is a strain washer (13) which connects the rotor shaft (5) to the gear mechanism (4).

5. A turning device (24) according to Claim 1, **characterised in that** the adaptor disk (17) is divided into a plurality of segments (17a, 17b), in particular is divided into two.

6. A turning device (24) according to Claim 1, **characterised in that** the stroke of the linear setting element (28a) can be arrested.

7. A turning device (24) according to Claim 1, **characterised by** two linear setting elements (28a, 28b).

## Revendications

1. Vireur (24) pour la rotation de l'axe de générateur (1) d'une éolienne ou au moins de sections partielles de celui-ci,
a) où l'axe de générateur (1) est logé d'une manière tournante dans un châssis de machine (2),
b) où l'axe de générateur (1) comprend une bride (16);
c) et où le vireur (24) comprend une console (29a) pouvant être fixée au châssis de machine (2),
**caractérisé par**
d) un disque d'adaptateur (17) pouvant être monté sur la bride (16), qui présente une pluralité de points d'attaque de force (19) qui sont disposés le long d'un cercle (20),
e) et au moins un organe de positionnement linéaire (28a) qui est logé d'une part, d'une manière angulairement mobile, dans la console (29a) et qui peut être couplée, d'une manière angulairement mobile, d'autre part, avec le disque d'adaptateur (17) par les points d'attaque de force (19) de celui-ci.

2. Vireur (24) selon la revendication 1, **caractérisé par** au moins un levier (25a),
a) avec une articulation à levier (27) dans laquelle l'organe de positionnement linéaire (28a) est logé d'une manière angulairement mobile,
b) et avec une interface (26) correspondant aux points d'introduction de force (19) du disque d'adaptateur (17), par laquelle le levier (25a) peut être fixé au disque d'adaptateur (17).

3. Vireur (24) selon la revendication 1, **caractérisé**
a) **en ce que** la bride (16) présente une pluralité de têtes de vis (14) qui sont disposées sur un cercle partiel de vis (15),
b) et **en ce que** le disque d'adaptateur (17) présente un cercle de trous (21) dont le diamètre correspond à celui du cercle partiel de vis (15) et dans les trous (22) duquel peuvent être insérés des inserts de clés à douille (23) adaptés aux têtes de vis (14).

4. Vireur (24) selon la revendication 3, où l'axe de générateur (1) comprend un arbre de rotor (5) et un engrenage (4), **caractérisé en ce que** dans le cas de la bride (16), il s'agit d'un disque de serrage (13) qui relie l'arbre de rotor (5) avec l'engrenage (4).

5. Vireur (24) selon la revendication 1, **caractérisé en ce que** le disque d'adaptateur (17) est séparé en une pluralité de segments (17a, 17b), en particulier est divisé en deux.

6. Vireur (24) selon la revendication 1, **caractérisé en ce que** la course de l'organe de positionnement linéaire (28a) peut être arrêtée.

7. Vireur (24) selon la revendication 1, **caractérisé par** deux organes de positionnement linéaires (28a, 28b).
